# EUROPÄISCHE PATENTANMELDUNG

(11) **EP 0 676 821 A1**
(43) Veröffentlichungstag der Anmeldung: **11.10.1995**
(21) Anmeldenummer: 94103502.4
(22) Anmeldetag: 09.03.1994
(51) Int. Cl.: H01M 10/04

(54) **Elektrochemische Stromquelle**

(71) Anmelder: Herrmann, Wolfgang, D-57548 Kirchen/Sieg (DE); Grebentchikov, Anatoli, D-57548 Kirchen (DE); Grebentchikov, Konstantin, D-57548 Kirchen (DE)
(72) Erfinder: Herrmann, Wolfgang, D-57548 Kirchen/Sieg (DE); Grebentchikov, Anatoli, D-57548 Kirchen (DE); Grebentchikov, Konstantin, D-57548 Kirchen (DE)

(57) **Zusammenfassung**

Elektrochemische Stromquelle, bei der die Teilchen des aktiven Stoffes der positiven Elektroden in den Kristallgitterknoten des entsprechenden Stromableiters verteilt sind.

## Beschreibung

Die Erfindung gehört zur chemischen Stromquelle (halvanischen Elementen), Batterien-Akkumulatoren, die breit in den Fachbetrieben, elektronischen, Radio Apparaten auch in dem häuslichen Bereich und bestimmt benutzt werden.

Gegenstand der vorliegenden Erfindung ist eine chemische Stromquelle, die die dünnblattrige gegenpalarische Elektroden enthält, die in einem Elektrolit plaziert sind und separat voneinander getrennt sind. Die Arbeit so einer Stromquelle basiert sich auf die von innen entstehende elektrochemische Raktion, die weit weg in der Weltpraxis bekannt ist.
Der Vorteil so einer Stromquelle besteht im Folgenden:
Erstens ergibt sich die Möglichkeit weiterhin eine Vergrößerung der Energieaufnahmefertigkeit der Quelle bei der Erhaltung der Gabariten. Das bedeutet seine zeitliche Funktion wird verbreitet (breiter, weiter).
Zweitens, für Produzenten (Firmen) solcher Art Erzeugnisse (Produktionen) ergibt sich die Möglichkeit, den technologischen Prozess zu vereinfachen. Das bedeutet, den Verbrauch für die Verfertigung wesentlich billiger zu machen.

Gegenstand (Zweck) der Erfindung ist die chemische Stromquelle, in dem die aktiven Stoffe im Prozess der elektrochemischen Reaktion mit einem größeren Koeffizient des Wirkungsgrades funktionieren.

Im Einklang mit der Erfindung, so eine hohe Funktion des Stoffes kann erreicht werden, wenn der Inhalt auf Eins (Einheit, einer) der Umfang der Stromquelle vergrößern, aber die Anordnung des Stoffes konstruktions verwenden.

Die chemische Stromquelle im Einklang mit der Erfindung zeigt vielseitige Vorteile (Nutzen). Auf Grundlage, daß der Inhalt aktiver Stoffe auf Eins (Einheit, Einer) der Umfang sich vergrößern läßt, folglich kann man die Zeit der Funktion (Arbeit) so einer Quelle verbreiten (breiter machen, weiter, vergrößern), daß heißt Elektrochemische Reaktion wird bei angegebenem Regime längere Zeit verlaufen, aber die neue Vereinfachung der technologischen Prozesse, was eine Voraussetzung schaft zur Verbilligung (billig) der verfertigenden Produktion (Ware). Alles zusammen genommen erlaubt, eine wesentlich verbreiterte (breit, weit) Anwendung dieser Art chemischer Stromquellen in verschiedenen Bereichen.

Einer von den Wegen, der zur Erfüllung der Erfindung führt ist die Verwendung zu der Seite vollkommener Konstruktionen (schauen die Prioritheten USA, BRD usw.) chemischen Stromquelle. Betrachten die Analoge von dem Gesichtspunkt der Konstruktionsquelle, läßt sich die Folgerung zusammen gestalten, daß die Menge (Quantität) der nutzlicher Umfang, der mit Elementen und Teilen besetzt ist und die in der chemischen Reaktion nicht beseitigt sind,ist unberechtigt groß. Folglich stellt sich die technische Aufgabe:
Z. Bsp.: Maximale Vervollkommung der erwähnten Elemente und Teile der Stromquelle, damit die wenigsten 1/3 von dem gemeinsamen Umfang einnehmen und in dem frei gewordenen Teil der Umfang zusätzliche aktive Materialien positiven und negativen Elektrogen einführen (einbringen).

## Patentansprüche

1. Die chemische Stromquelle enthält dünnblättrigen negativen Elektrod der dargestellt ist als Metallstromarbeiten, auf den eine dünne Schicht aktives Stoffes negativer Elektroden aufgetragen ist, und dünnblattrige positiver Elektro dargestellt als Metallstromableiter, bei den auf der Oberfläche gegenstehende dem Verteiler (Separator) in den Kristallgitterknoten sind, teilen des aktiven Stoffes untergebracht, des positives Elektrodes.

2. Chemische Stromquelle in Einstimmung von der 1 Förderung enthält der Verteiler (Separator) der als immer recht gestricktes (strumpfgestricktes)Netz aus dünnen Isoliergarn hergestellt ist, dabei um den Kurzschluß zu vermeiden, die Größe der durchgehenden Zellchen (Bienenzelle) sind zum Minimum gebracht.

3. Chemische Stromquelle in Einstimmung mit Forderung 1 und 2 enthält Elektrolit in den halbflüssigen Zustand für das Vermeiden eines willkürligeres Auslaufen, dabei besorgt das Elektrolit eine 1oo % Umspülung aktiven Oberflächen des Elektroden.

4. Chemische Stromquelle in Einstimmung mit Forderung 1 enthält Oxyd Kupfer in Form aktives Stoffes des positives Elektrodes.
